# EUROPÄISCHE PATENTSCHRIFT

(11) **EP 1 345 061 B1**
(45) Veröffentlichungstag und Bekanntmachung des Hinweises auf die Patenterteilung: **25.04.2007**
(21) Anmeldenummer: 03004769.0
(22) Anmeldetag: 05.03.2003
(51) Int. Cl.: G02B 15/14, G02B 7/02, G02B 7/04

(54) **Axial verschiebbare gewindefreie Justierfassung für optische Bauteile sowie Verfahren zu ihrer Herstellung**
Axially translatable threadless positionable holder for optical elements and the method of fabrication thereof
Monture pour éléments optiques, sans filetage et déplaçable axialement, et méthode pour sa fabrication

(30) Priorität: 06.03.2002 DE 10209938
(43) Veröffentlichungstag der Anmeldung: 17.09.2003
(73) Patentinhaber: Leica Microsystems (Schweiz) AG, 9435 Heerbrugg (CH)
(72) Erfinder: Ritz, Albert, 9436 Balgach (CH); Geschwentner, Otto, 9436 Balgach (CH); Soppelsa, Peter, 9436 Balgach (CH); Zimmermann, Heinz, 9436 Balgach (CH)
(74) Vertreter: Reichert, Werner Franz

(56) Entgegenhaltungen:
- US-A- 4 458 990
- US-A- 5 581 317
- US-A- 5 894 372
- PATENT ABSTRACTS OF JAPAN Bd. 0061, Nr. 95 (P-146), 5. Oktober 1982 (1982-10-05) -& JP 57 105702 A (RICOH CO LTD), 1. Juli 1982 (1982-07-01)
- PATENT ABSTRACTS OF JAPAN Bd. 0072, Nr. 31 (P-229), 13. Oktober 1983 (1983-10-13) & JP 58 118612 A (KONISHIROKU SHASHIN KOGYO KK), 14. Juli 1983 (1983-07-14)

## Beschreibung

Die Anmeldung betrifft eine axial verschiebbare Justierfassung für optische Bauteile, insbesondere für Linsen bzw. Linsen-Kombinationen von Zoomsystemen, sowie ein Verfahren zu ihrer Herstellung.

In optischen Zoomsystemen sind einzelne Linsenglieder oder verkittete Linsenkombinationen axial verschiebbar angeordnet, um die Parfokalität über den gesamten Zoombereich einjustieren und beibehalten zu können. Bei derartigen Translationen sollte es nach Möglichkeit nicht zu Verkippungen der Linsenglieder bzw. ihrer Fassungen kommen, weil dadurch Dezentrierungen auftreten können, die zur Verschlechterung der Bildqualität des optischen Gesamtsystems führen.

Justierfassungen sind z.B. aus der Patentschrift US 5 581 317 und aus der Anmeldeschrift JP 58 118 612 bekannt.

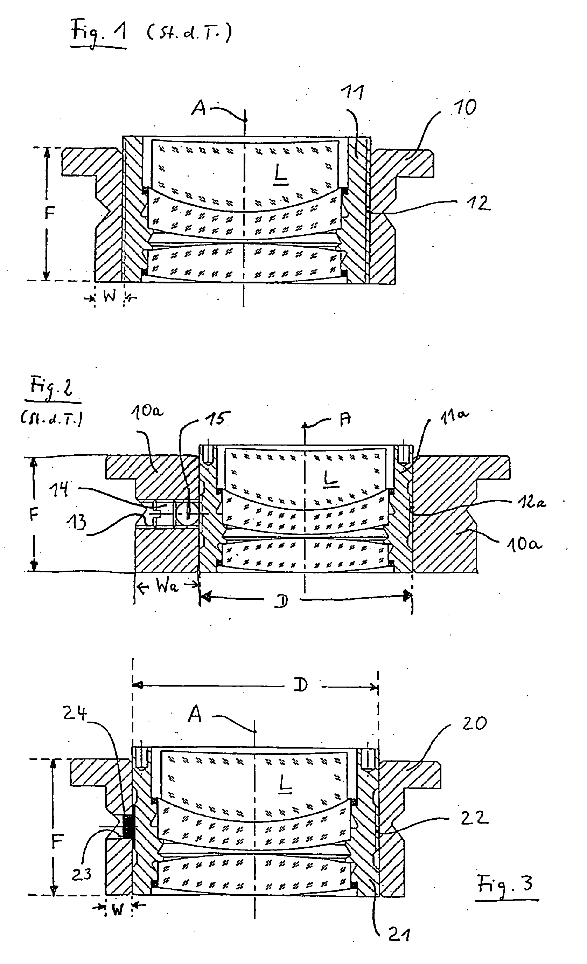

Eine bekannte Justierfassung 11 ist in Fig. 1 dargestellt. Sie weist ein durchgängiges Transportgewinde 12 auf, das mit einem entsprechenden Innengewinde einer Fassungsaufnahme 10 korrespondiert. Ein verkittetes Linsenglied L und eine weitere Einzellinse sind in an sich bekannter Weise in der Justierfassung 11 gehaltert. Bei exakter Positionierung fallen die optischen Achsen der Linsen L mit der optischen Achse des Gesamtsystems zusammen. Nachteilig bei dieser Justierfassung 11 ist, dass durch das prinzipiell vorhandene Gewindespiel die Gefahr einer großen Verkippung dieser Justierfassung möglich ist, was zu den geschilderten Verschlechterungen der Bildqualität führt.

Eine weitere bekannte Justierfassung weist ein Transportgewinde mit einem Führungsdurchmesser an der Fassungsaufnahme und an der eigentlichen Justierfassung auf. Dabei ist es von Nachteil, dass das Transportgewinde die Führungslänge - sie ist in den Figuren jeweils mit F gekennzeichnet - verkürzt. Darüber hinaus benötigt auch die äußere Fassungsaufnahme ein Innengewinde, was die Herstellungskosten stark erhöht.

Bei einer weiteren bekannten Justierfassung sind ein Transportgewinde sowie zwei verschiedene Führungsdurchmesser an der Fassungsaufnahme und der eigentlichen Justierfassung vorgesehen. Nachteilig ist, dass die Führungsdurchmesser in getrennten Arbeitsgängen hergestellt werden müssen und die Anpassung der Führungsdurchmesser von Fassungsaufnahme und Justierfassung nur mit hohem Aufwand möglich ist.

Schließlich ist eine weitere Justierfassung bekannt, vgl. Fig. 2. Über die gesamte Führungslänge F sind zwei gleiche Führungsdurchmesser und ein Transportgewinde 12a im Mittelbereich zwischen den Führungsdurchmessern an der Justierfassung 11a sowie ein durchgängiger Führungsdurchmesser ohne Gewinde an der Fassungsaufnahme 10a vorgesehen.

Durch eine seitliche Bohrung 13 mit Innengewinde in der Fassungsaufnahme 10a, die aus diesem Grunde eine dicke Wandstärke Wa aufweisen muss, wird eine elastische Kugel 15 in das Gewinde gedrückt und durch eine Sicherungsschraube 14 gehalten. Die Kugel 15 greift partiell in das Transportgewinde 12a und bewirkt beim Verdrehen der Justierfassung 11a eine Axialbewegung. Bei dieser bekannten Fassung ist es von Nachteil, dass zur Aufnahme der elastischen Kugel 15 und der Sicherungsschraube 14 eine große Wandstärke Wa der Fassungsaufnahme 10a benötigt wird. Außerdem übt die Kugel 15 eine Kraft auf die Fassung 11a aus, die zu einer Verformung der Justierfassung und zu einer sich daraus ergebenden Verspannung der Linsen führen kann.

Es ist daher eine Teilaufgabe der vorliegenden Erfindung, eine axial verschiebbare Justierfassung anzugeben, die die aufgezeigten Nachteile nicht aufweist und die verkippungsarme Axial-Translationen auszuführen gestattet. Eine weitere Teilaufgabe besteht darin, ein Verfahren zur Herstellung einer zentrier- und justiertreuen, axial verschieblichen Justierfassung anzugeben.

Diese Aufgabe wird bei einer Justierfassung der eingangs genannten Art in erfindungsgemäßer Weise durch die Merkmale der Patentansprüche 1 und 10 gelöst. Weitere Ausgestaltungen ergeben sich aus den Unteransprüchen.

Die Vorteile der erfindungsgmäßen Anordnung bzw. des Verfahrens bestehen darin, dass eine Material sparende und Kosten reduzierende Anordnung erhalten wird, bei der eine Verkippung während des Translationsvorganges gegenüber bekannten Lösungen drastisch reduziert bzw. minimiert wird. Die Fassungsaufnahme kann einfacher gestaltet werden; dies insbesonders auch dann, wenn nur geringe Wandstärken zugelassen werden können beziehungsweise konstruktiv bedingt sind.

Die Erfindung wird nunmehr an Hand der Zeichnungen näher erläutert. Es zeigen in schematischer Darstellung:
- Fig. 1:: eine bekannte Justierfassung mit durchgehendem Transportgewinde;
- Fig. 2:: eine weitere bekannte Justierfassung mit gewindefreier Fassungsaufnahme;
- Fig. 3:: eine erfindungsgemäße Ausführungsform mit gewindefreier Fassungsaufnahme dünner Wandstärke.

Die Fig. 1 und 2 wurden zur Verdeutlichung des Standes der Technik einleitend bereits im wesentlichen erläutert. Zu beachten sind die sogenannte Führungslänge F sowie der Führungsdurchmesser D. Auffallend ist die dicke Wandstärke Wa in Fig. 2; sie wird erforderlich, um die in der Querbohrung 13 positonierte Kugel 15 und die Sicherungsschraube 14 komplett aufzunehmen.

In der Fig 3 wird eine erfindungsgemäße Ausführungsform dargestellt. Die dargestellten Linsen - unter anderem die Linsen L - sind in der Justierfassung 21 in bekannter Weise zentriergenau eingekittet. Der zylindrische Außenbereich der Justierfassung 21 weist in seinem Zentralbereich ein Transportgewinde 22 auf, das keine korrespondierende Entsprechung an der Innenseite der Fassungsaufnahme 20 besitzt. Die Führungsaufnahme 20 mit ihrer geringen Wandstärke W weist also über den gesamten Bereich der Führungslänge F in ihrem Inneren kein Gewinde auf. Im oberen und unteren Außenbereich der Justierfassung 21 befinden sich zylinderförmige gewindefreie Führungsflächen mit dem Führungsdurchmesser D. Die Fassungsaufnahme 20 weist eine gewindefreie Querbohrung 23 auf, die im wesentlichen senkrecht zur Achse der Fassungsaufnahme 20 bzw. der optischen Achse A des Systems liegt.

Die Vormontage der Justierfassung 21 gemäß Fig. 3 erfolgt nun in an sich bekannter Weise. Danach wird zunächst derjenige Bereich des Transportgewindes 22 mit einem Antihaftmittel beschichtet, der dem Bohrloch 23 zugewandt ist. Die Beschichtung kann in der Weise erfolgen, dass beispielsweise eine dünne Fett- oder Wachsschicht auf dem entsprechenden Gewindebereich aufgestrichen oder aufgespritzt wird. Alternativ könnte auch eine dünne Teflonschicht appliziert werden. Sodann wird eine pastöse, später aushärtende Kunststoff-Vergussmasse 24 in das Bohrloch 23 derart eingebracht, dass sie dessen inneren, zur Justierfassung 21 weisenden Bereich sowie den zugeordneten Bereich des mit dem Antihaftmittel beschichteten Transportgewindes 22 formschlüssig ausfüllt. Nach dem Aushärten der Vergussmasse 24 ist in situ gewissermaßen ein Gewindesegment hergestellt worden, das die konstruktiv vorgegebenen sowie auch die fertigungstechnisch bedingten Zwischenräume im vorgesehenen Bereich lückenlos ausfüllt. Von Bedeutung ist, dass durch diese erfindungsgemäße "Gewinde-Abdruck"-Technik die Herstellung der Fassungsbauteile mit einer größeren Fertigungstoleranz akzeptiert werden kann, was zu kostengünstigeren Produktionsbedingungen führt.

Durch die Antihaft-Beschichtung wird ein Verkleben mit der "Form" - also dem Gewindeteil - sicher verhindert. Die ausgehärtete Masse 24 ist vor Ort zu einem spielfreien Gewindeersatz geworden. Dieser ermöglicht ein exaktes Verschieben der Justierfassung 21 und bewirkt, dass die einmal vorgenommene Zentrierung bzw. Justierung des optischen Systems erhalten bleibt und damit - bei einem Zoomsystem - auch die geforderte Parfokalität.

Die erfindungsgemäße Anordnung hat in vorteilhafter Weise nur einen durchgängigen Durchmesser D von maximaler Länge F ohne ein fertigungstechnisch aufwändiges Innengewinde der Fassungsaufnahme 20. Die maximale Führungslänge F verhindert somit eine Verkippung der Justierfassung 21, die ansonsten als Folge der Toleranzen von D auftreten würde. Das erfindungsgemäße Verfahren ist auch bei geringen Wandstärken W anwendbar. Von weiterem Vorteil ist, dass die ausgehärtete Kunststoff-Vergussmasse 24 keine destabilisierende bzw. dezentrierende Kraft auf die Justierfassung 21 ausübt.

Die Erfindung wurde an Hand der Fig. 3 erläutert, in der nur eine Querbohrung 23 vorgesehen ist. Es liegt selbstverständlich im Rahmen der vorliegenden Erfindung, zwei oder mehrere - vorzugsweise gleichartige - Bohrungen vorzusehen. Diese können in einer Ebene, die senkrecht zur Achse der zylindrischen Fassung angeordnet ist, liegen. Es ist indes auch möglich, zwei oder mehrere Bohrungen in der Justierfassung 21 vorzusehen, die auf unterschiedlichen Ebenen liegen.

Die Erfindung ist nicht auf die Justierung von Linsengliedern beschränkt. Sie kann auch zur Justierung weiterer feinmechanisch-optischer Bauelemente genutzt werden. Zum Beispiel zur exakten achsen-senkrechten Positionierung von Spiegeln und/oder Prismen und/oder Strichplatten sowie zur axialen Verschiebung von ausgerichteten Laserdioden und/oder Blenden und/oder Glasfaser-Austrittsflächen und/oder mechanischen Präzisions-Anlageflächen.

### Bezugszeichenliste

- 10 -: Fassungsaufnahme (mit Innengewinde)
- 10a; 20 -: Fassungsaufnahme (ohne Innengewinde)
- 11 -: Justierfassung (mit durchgängigem Außengewinde)
- 11a; 21 -: Justierfassung (mit Außengewinde lediglich im Zentralbereich)
- 12 -: Transportgewinde (Außengewinde von (11)/Innengewinde von (10))
- 12a; 22 -: Transportgewinde (Außengewinde von (11a) bzw. (21), nur im Mittelbereich von (11a) bzw. (21))
- 14 -: Sicherungsschraube
- 15 -: (elastische) Kugel
- 23 -: Bohrloch; Querbohrung/Queröffnung (innengewindefrei)
- 24 -: Kunststoff-Vergussmasse; aushärtende bzw. ausgehärtete Masse (Gewindeersatz/Gewindesegment)
- A -: optische Achse von (L) /Achse(n) von (10-12), (20-22)
- D -: Führungsdurchmesser (durchgehende, gewindefreie, zylindrische Bohrung in (10a) bzw. (20))
- F -: Führungslänge
- L -: Linsenglied; Kittglied
- W -: (dünne) Wandstärke von (10) bzw. (20)
- Wa -: (dicke) Wandstärke von (10a)

## Patentansprüche

1. System mit einer axial verschiebbaren Justierfassung (21) zur Aufnahme von optischen Bauteilen, insbesondere von Linsen (L) und/oder Linsenkombinationen von Zoomsystemen, enthaltend
f) eine Fassungsaufnahme (20) mit zylindrischer Bohrung mit Führungsdurchmesser (D) zur Aufnahme der Justierfassung, wobei die Fassungsaufnahme in ihrem Mittelbereich mindestens eine bis zur Justierfassung durchgehende Queröffnung (23) aufweist, und
g) wobei die Justierfassung in ihren beiden Endbereichen einen zylindrischen Führungsdurchmesser und in ihrem Mittelbereich ein Transportgewinde (22) aufweist,
**dadurch gekennzeichnet, dass**
h) der zylindrische Führungsdurchmesser (D) der Fassungsaufnahme (20) innengewindefrei ausgeführt ist,
i) der Außendurchmesser des Transportgewindes (22) nicht größer als der Führungsdurchmesser (D) ist und
j) in der Queröffnung (23) ein einstückiges Gewindesegment (24) angeordnet ist, das im Bereich der Queröffnung (23) formschlüssig mit dem Transportgewinde (22) verbunden ist.

2. Justierfassung nach Anspruch 1, **dadurch gekennzeichnet, dass** die Queröffnung (23) als innengewindefreie Bohrung ausgeführt ist.

3. Justierfassung nach Anspruch 1 oder 2, **dadurch gekennzeichnet, dass** das einstückige Gewindesegment (24) aus Kunststoff besteht und im Bereich der Queröffnung (23) mit dem Transportgewinde (22) eine formschlüssige Abgussform des Gewindebereiches bildet.

4. Justierfassung nach einem der vorhergehenden Ansprüche, **dadurch gekennzeichnet, dass** das Gewindesegment (24) in seinem zum Transportgewinde (22) weisenden Bereich eine größere Flächenausdehnung aufweist als im Bereich der Querbohrung (23).

5. Justierfassung nach Anspruch 3, **dadurch gekennzeichnet, dass** der Kunststoff eine ausgehärtete, formstabile Masse ist.

6. Justierfassung nach einem der vorhergehenden Ansprüche, **dadurch gekennzeichnet, dass** die Fassungsaufnahme (20) in ihrem Mittelbereich mindestens zwei Queröffnungen (23) aufweist, die jeweils mit einer ausgehärteten Masse als Gewindeersatz versehen wird.

7. Justierfassung nach einem vorhergehenden Ansprüche, **dadurch gekennzeichnet, dass** das Transportgewinde (22) zumindest in seinem Kontaktbereich mit dem Gewindesegment (24) eine Antihaft-Beschichtung aufweist.

8. Justierfassung nach Anspruch 7, **dadurch gekennzeichnet, dass** das Antihaftmittel für die Beschichtung ein Fett oder ein Wachs ist.

9. Justierfassung nach mindestens einem der vorhergehenden Ansprüche, **dadurch gekennzeichnet, dass** als optische Bauteile Spiegel und/oder Blenden und/oder Strichplatten und/oder Dioden und/oder Glasfaser-Austrittsflächen und/oder mechanische Präzisions-Anlageflächen vorgesehen sind.

10. Verfahren zur Herstellung eines Systems mit einer axial verschiebbaren Justierfassung zur Aufnahme von optischen Bauelementen, insbesondere für Linsen und/oder Linsenkombinationen von Zoomsystemen, und mit einer Fassungsaufnahme mit zylindrischer Bohrung zur Aufnahme der Justierfassung, die nur in ihrem Mittelbereich ein Transportgewinde aufweist, wobei die Fassungsaufnahme mindestens eine bis zum Transportgewinde reichende Queröffnung aufweist, **gekennzeichnet durch** die folgenden Verfahrensschritte:
a) Vormontieren der die Linsen (L) enthaltenden Justierfassung (21);
b) Aufbringen einer Antihaft-Beschichtung auf dem Transportgewinde (22);
c) Einbringen der Justierfassung (21) in die Fassungsaufnahme (20),
d) Einbringen einer pastösen Kunststoff-Vergussmasse (24) über die Queröffnung(en) (23) in das Transportgewinde (22) und
e) Aushärten lassen der Kunststoff-Vergussmasse (24) zu einem abgeformten Gewindesegmente.

11. Verfahren nach Anspruch 10, **dadurch gekennzeichnet, dass** die Antihaft-Beschichtung aus Teflon oder einem Fett oder einem Wachs besteht.

## Claims

1. System with an axially displaceable adjusting mount (21) for receiving optical components, in particular lenses (L) and/or lens combinations of zoom systems, comprising
f) a mount receptacle (20) with a cylindrical bore with a guidance diameter (D) for receiving the adjusting mount, the mount receptacle having in its central area at least one transverse opening (23) that extends to the adjusting mount, and
g) the adjusting mount having a cylindrical guidance diameter in its two end regions and a transport thread (22) in its central area,
**characterized in that**
h) the cylindrical guidance diameter (D) of the mount receptacle (20) is embodied so as to be free of an inner thread,
i) the outer diameter of the transport thread (22) is not greater than the guidance diameter (D), and
j) a single-piece thread segment (24) that is positively connected to the transport thread (22) in the area of the transverse opening (23) is disposed in the transverse opening (23).

2. Adjusting mount according to claim 1, **characterized in that** the transverse opening (23) is embodied as a bore that is free of an inner thread.

3. Adjusting mount according to claim 1 or 2, **characterized in that** the single-piece thread segment (24) consists of plastic and forms with the transport thread (22) a positive casting form of the thread area in the area of the transverse opening (23).

4. Adjusting mount according to one of the preceding claims, **characterized in that** the thread segment (24) has a greater surface extent in its area facing the transport thread (22) than in the area of the transverse bore (23).

5. Adjusting mount according to claim 3, **characterized in that** the plastic is a hardened dimensionally stable mass.

6. Adjusting mount according to one of the preceding claims, **characterized in that** the mount receptacle (20) has in its central area at least two transverse openings (23) that are each provided with a hardened mass as a thread replacement.

7. Adjusting mount according to one of the preceding claims, **characterized in that** the transport thread (22) has a non-stick coating at least in its contact area with the thread segment (24).

8. Adjusting mount according to claim 7, **characterized in that** the non-stick agent for the coating is a grease or a wax.

9. Adjusting mount according to at least one of the preceding claims, **characterized in that** mirrors and/or diaphragms and/or reticles and/or diodes and/or exit surfaces for optical fibres and/or mechanical precision bearing surfaces are provided as optical components.

10. Method for producing a system with an axially displaceable adjusting mount for receiving optical components, in particular for lenses and/or lens combinations of zoom systems, and with a mount receptacle receiving with a cylindrical bore for receiving the adjusting mount that has a transport thread only in its central area, the mount receptacle having at least one transverse opening that extends to the transport thread, **characterized by** the following method steps:
a) pre-assembling the adjusting mount (21) containing the lens (L);
b) applying a non-stick coating on the transport thread (22);
c) inserting the adjusting mount (21) into the mount receptacle (20);
d) inserting a pasty plastic casting compound (24) into the transport thread (22) via the transverse opening(s) (23) and
e) allowing the plastic casting compound (24) to harden to form a moulded thread segment.

11. Method according to claim 10, **characterized in that** the non-stick coating consists of Teflon or a grease or a wax.

## Revendications

1. Système comprenant une monture ajustable (21) déplaçable axialement, pour recevoir des éléments optiques, notamment des lentilles (L) et/ou des combinaisons de lentilles de systèmes de zoom, comprenant
f) un logement de monture (20) avec un alésage cylindrique et un diamètre de guidage (D) pour recevoir la monture ajustable, le logement de monture présentant dans sa région centrale au moins une ouverture transversale (23) s'étendant jusqu'à la monture ajustable, et
g) la monture ajustable présentant dans ses deux régions d'extrémité un diamètre de guidage cylindrique et dans sa région centrale un filetage de transport (22),
**caractérisé en ce que**
h) le diamètre de guidage cylindrique (D) du logement de monture (20) est réalisé sans filetage interne,
i) le diamètre extérieur du filetage de transport (22) n'est pas plus grand que le diamètre de guidage (D) et
j) dans l'ouverture transversale (23) est disposé un segment fileté d'une seule pièce (24), qui est connecté dans la région de l'ouverture transversale (23) par engagement positif avec le filetage de transport (22).

2. Monture ajustable selon la revendication 1, **caractérisée en ce que** l'ouverture transversale (23) est réalisée sous la forme d'un alésage sans filetage interne.

3. Monture ajustable selon la revendication 1 ou 2, **caractérisée en ce que** le segment fileté d'une seule pièce (24) est en plastique et forme dans la région de l'ouverture transversale (23) avec le filetage de transport (22) un moule de coulée à engagement positif de la région filetée.

4. Monture ajustable selon l'une quelconque des revendications précédentes, **caractérisée en ce que** le segment fileté (24) présente dans sa région présentant le filetage de transport (22) une plus grande extension de surface que dans la région de l'alésage transversal (23).

5. Monture ajustable selon la revendication 3, **caractérisée en ce que** le plastique est une masse durcie de forme stable.

6. Monture ajustable selon l'une quelconque des revendications précédentes, **caractérisée en ce que** le logement de monture (20) présente dans sa région centrale au moins deux ouvertures transversales (23), qui sont chacune pourvues d'une masse durcie remplaçant le filetage.

7. Monture ajustable selon l'une quelconque des revendications précédentes, **caractérisée en ce que** le filetage de transport (22) présente au moins dans sa région de contact avec le segment fileté (24) un revêtement antiadhésif.

8. Monture ajustable selon la revendication 7, **caractérisée en ce que** l'agent antiadhésif pour le revêtement est une graisse ou une cire.

9. Monture ajustable selon au moins l'une quelconque des revendications précédentes, **caractérisée en ce que** l'on prévoit comme éléments optiques des miroirs et/ou des diaphragmes et/ou des réticules et/ou des diodes et/ou des surfaces de sortie en fibre de verre et/ou des surfaces d'appui de précision mécaniques.

10. Procédé de fabrication d'un système comprenant une monture ajustable déplaçable axialement pour recevoir des éléments optiques, notamment pour des lentilles et/ou des combinaisons de lentilles de systèmes de zoom, et comprenant un logement de monture avec un alésage cylindrique pour recevoir la monture ajustable, qui présente un filetage de transport uniquement dans sa région centrale, le logement de monture présentant au moins une ouverture transversale s'étendant jusqu'au filetage de transport, **caractérisé par** les étapes de procédé suivantes :
a) prémontage de la monture ajustable (21) contenant les lentilles (L) ;
b) application d'un revêtement antiadhésif sur le filetage de transport (22) ;
c) introduction de la monture ajustable (21) dans le logement de monture (20),
d) introduction d'une masse de scellement en plastique pâteuse (24) par-dessus la ou les ouvertures transversales (23) dans le filetage de transport (22) et
e) durcissement de la masse de scellement en plastique (24) pour donner un segment fileté moulé.

11. Procédé selon la revendication 10, **caractérisé en ce que** le revêtement antiadhésif se compose de téflon ou d'une graisse ou d'une cire.
